(19) Europäisches Patentamt
European Patent Office
Office européen des brevets

(11) Veröffentlichungsnummer : **0 442 143 B1**

# (12) EUROPÄISCHE PATENTSCHRIFT

(45) Veröffentlichungstag der Patentschrift : **15.12.93 Patentblatt 93/50**

(51) Int. Cl.$^5$ : **C09C 3/12,** C08K 9/06

(21) Anmeldenummer : **90125475.5**

(22) Anmeldetag : **24.12.90**

## (54) Verfahren zur Herstellung von mit Organosiliciumverbindungen modifizierten Füllstoffen, die so hergestellten Füllstoffe und deren Verwendung.

(30) Priorität : **16.02.90 DE 4004781**

(43) Veröffentlichungstag der Anmeldung : **21.08.91 Patentblatt 91/34**

(45) Bekanntmachung des Hinweises auf die Patenterteilung : **15.12.93 Patentblatt 93/50**

(84) Benannte Vertragsstaaten : **AT BE CH DE DK ES FR GB IT LI LU NL SE**

(56) Entgegenhaltungen :
**EP-A- 0 126 871**
**GB-A- 2 206 889**
**US-A- 4 076 550**

(73) Patentinhaber : **DEGUSSA AG**
**Weissfrauenstrasse 9**
**D-60311 Frankfurt (DE)**

(72) Erfinder : **Wolff, Siegfried, Dr.**
**Weiherstrasse 28**
**W-5303 Bornheim-Merten (DE)**
Erfinder : **Görl, Udo, Dr.**
**Quittenstrasse 36**
**W-5309 Meckenheim (DE)**
Erfinder : **Deusser, Hans, Dr.**
**Stifterstrasse 14**
**W-8757 Karlstein (DE)**

**EP 0 442 143 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von mit Organosiliciumverbindungen modifizierten, lagerstabilen natürlichen oder synthetischen, oxidischen oder silikatischen Füllstoffen,

Es ist bekannt, oxidische Oberflächen mit Organosiliciumverbindungen zu behandeln, um durch diese Vorbehandlung den Verbund zwischen oxidischem Füllstoff und organischen Polymeren unterschiedlichster chemischer Zusammensetzung und damit die verstärkenden Eigenschaften der Füllstoffe in den Polymeren zu verbessern.

Zu diesem Zweck kann man z.B. die betreffende Organosiliciumverbindung in einem organischen Lösungsmittel auflösen und mit dieser Lösung anschließend z.B. Clays behandeln (US-PS 3,227,675 Huber). Aus der US-PS 3,567,680 ist bekannt, in Wasser suspendierte Kaoline mit Mercapto- und Aminosilanen zu modifizieren. Die betreffenden Organosiliciumverbindungen sind jedoch in den für die Modifizierung nötigen Mengen wasserlöslich, so daß auch in diesem Fall die Behandlung des Füllstoffs aus einer Lösung heraus erfolgt.

Die US-PS 4,151,154 betrifft oxidische silikatische Füllstoffe, deren Oberfläche einer Behandlung mit zwei Typen von Organosiliciumverbindungen ausgesetzt wird.

Die oxidischen Teilchen werden dabei so behandelt, daß sie eine größere Affinität zu Wasser zeigen und sich auch leichter in wässrigen Systemen verteilen lassen. Aus der US-PS 4,076,550 ist die Verwendung von schwefelhaltigen Organosiliciumverbindungen in vulkanisierbaren Kautschukmischungen bekannt.

Man kann diese Verbindung auch in Abmischungen mit Kieselsäure einsetzen, die aber nicht thermisch vorbehandelt werden und nur über eine begrenzte Lagerstabilität verfügen.

In der EP-PS-0 126 871 wird ein Verfahren beschrieben, bei dem man die Oberfläche silikatischer Füllstoffe mit Hilfe einer wässrigen Emulsion von wasserunlöslichen Organosiliciumverbindungen modifiziert.

Die US-PS 4,141,751 betrifft ein Verfahren, das gänzlich ohne Lösungsmittel auskommt, aber für bestimmte Organosiliciumverbindungen nicht praktikabel ist, wie die Praxis zeigt.

Gegenstand der Erfindung ist ein Verfahren zur Oberflächenmodifizierung von natürlichen oder synthetischen oxidischen oder silikatischen Füllstoffen unter Einsatz einer oder mehrerer Organosiliciumverbindungen der Formel (I)

$$\left[R^1_n(RO)_{3-n}Si \quad -(Alk)_m \quad -(Ar)_p\right] \quad q \quad \left[B\right] \qquad (I)$$

in der bedeuten:

B: -SCN (wenn q = 1) oder $-S_x$-(wenn q = 2)

R und $R^1$ eine Alkylgruppe mit 1 bis 4 Kohlenstoffatomen, den Phenylrest, wobei alle Reste R und $R^1$ jeweils die gleiche oder eine verschiedene Bedeutung haben können, R eine $C_1$-$C_4$-Alkyl-$C_1$-$C_4$-Alkoxygruppe,

n: = 0;1 oder 2

Alk: einen zweiwertigen, geraden oder verzweigten Kohlenwasserstoffrest mit 1 bis 6 Kohlenstoffatomen,

m: 0 oder 1

Ar: einen Arylenrest mit 6 bis 12 C-Atomen

p: 0 oder 1 mit der Maßgabe, daß p und m nicht gleichzeitig 0 bedeuten und

x: eine Zahl von 2 bis 8,

dadurch gekennzeichnet, daß man

a) mindestens eine Organosiliciumverbindung gemäß Formel I, bei Temperaturen kleiner 60 °C in einer Konzentration von $1 \cdot 10^{-7}$ bis $3{,}5 \cdot 10^{-6}$ Mol Trialkoxysilylgruppen auf einen Quatratmeter Füllstoffoberfläche, mit dem Füllstoff intensiv vermischt und

b) anschließend die homogenisierte Mischung im vorgeheizten Mischer, im Temperierbett oder einem anderen geeigneten heizbaren Reaktionsgefäß bei einer Temperatur von 60 °C bis 160 °C, bevorzugt 80 bis 140 °C , der Hydrophobierungsreaktion unterwirft. Die Verweilzeit im Reaktionsgefäß beläuft sich im allgemeinen auf 3 min bis 2,4 h.

Als Intensivmischer wählt man beispielsweise eine Pflugscharmischer, dessen Drehzahl man so reguliert, daß eine intensive Durchmischung gegeben ist, gleichzeitig aber die Struktur beispielsweise der eingesetzten feinteiligen Kieselsäuren nicht zerstört wird und auch die Temperatur unter 60 °C bleibt. Im allgemeinen liegt diese Temperatur zwischen 20 ° und <60 °C, während die Vorheiztemperatur mindestens 60 °C beträgt.

Die zu modifizierenden natürlichen und synthetischen Füllstoffe, auch als Gemische von zwei oder mehreren dieser Füllstoffe, sind an sich in der Kautschuktechnologie bekannt. Wesentliche Voraussetzung für ihre Eignung ist das Vorhandensein von OH-Gruppen an der Oberfläche, die mit den Alkoxygruppen der Organosiliciumverbindungen reagieren können. Es handelt sich um oxidische und silikatische Verbindungen, die mit Kautschuken verträglich sind und die für diese Verwendung notwendige Feinteiligkeit aufweisen.

Unter den natürlichen Silikaten eignen sich besonders Kaoline oder Clays. Aber auch Kieselgur oder Diatomeenerden können eingesetzt werden.

Als oxidische Füllstoffe sind beispielhaft zu nennen Aluminiumoxid, Aluminiumhydroxid oder -trihydrat und Titandioxid, die aus natürlichen Vorkommen gewonnen werden.

Als synthetische Füllstoffe sind besonders geeignet Aluminiumsilikate, Silikate, gefällte und pyrogene Kieselsäuren mit BET-Oberflächen (gemessen mit gasförmigem Stickstoff ) von 1 bis 1000 $m^2/g$, insbesondere bis 300 $m^2/g$.

Die erfindungsgemäß modifizierten Füllstoffe enthalten bis zu $3{,}5 \cdot 10^{-6}$ Mol Trialkoxysilylgruppen pro Quadratmeter Füllstoffoberfläche, bevorzugt $0{,}1 \cdot 10^{-6}$ bis $3{,}5 \cdot 10^{-6}$ Mol. Sie sind besonders geeignet zur Verwendung in vulkanisierbaren und formbaren Kautschukmischungen, die nach den üblichen Verfahren in der Gummiindustrie hergestellt werden.

Zu den geeigneten Kautschukarten zählen mit Schwefel sowie Vulkanisationsbeschleuniger(n) zu Elastomeren vernetzbare Kautschuke und deren Gemische. Insbesondere sind dies die halogenfreien Kautschukarten, vorzugsweise sogenannte Dien-Elastomere. Zu diesen Kautschukarten zählen beispielsweise ölgestreckte, natürliche und synthetische Kautschuke wie Naturkautschuke, Butadienkautschuke, Isoprenkautschuke, Butadien-Styrol-Kautschuke, Butadien-Acrylnitril-Kautschuke, Butylkautschuke, Terpolymere aus Ethylen, Propylen und nicht konjugierte Diene. Ferner kommen für Kautschukgemische mit den genannten Kautschuken die folgenden zusätzlichen Kautschuke infrage:

Carboxylkautschuke, Epoxidkautschuke, Trans- Polypentenamer, halogenierte Butylkauschuke, Kautschuke aus 2-Chlor-Butadien, Ethylen-Vinylacetat-Copolymere, Ethylen-Propylen-Copolymere, gegebenenfalls auch chemische Derivate des Naturkautschuks sowie modifizierte Naturkautschuke.

Dabei ist natürlich der vorgeschriebene Gesamtanteil des Füllstoffs in der vulkanisierbaren Kautschukmischung zu beachten. Das bedeutet, daß sowohl die Gesamtmenge des einzusetzenden Füllstoffs als auch eine Teilmenge modifiziert sein kann. Im letzteren Fall ist der noch fehlende Teil dann in nicht modifizierter Form zuzumischen.

Die erfindungsgemäß modifizierten Füllstoffe weisen gegenüber den reinen Abmischungen z.B. von Bis-(3-triethoxysilylpropyl)-tetrasulfan mit Kieselsäure, wie sie aus der US-PS 4,076,550 bekannt sind den Vorteil einer hohen Lagerstabilität auf.

Gegenüber dem bereits seit Jahren in der Kautschukindustrie angewandten in situ-Verfahren (direkte Zugabe von Silan zu Ruß und/oder mit Silikaten gefüllten Kautschukmischungen besitzen sie den Vorteil eines geringen Wassergehaltes, des höheren Stampfgewichts gegenüber unbehandeltem Füllstoff, der vereinfachten Lagerhaltung und darüber hinaus für den Anwender in der kautschukverarbeitenden Industrie besseres verarbeitungstechnisches Verhalten. (Homogene Mischungsherstellung, Einsparen von Mischstufen und Mischzeiten).

Nach dem in der US-PS 4,141,751 beschriebenen Verfahren sind die erfindungsgemäßen modifizierten Füllstoffe nicht herzustellen.

Vermischt man ein Bis-(3-trialkoxysilylpropyl)-tetrasulfan mit einem Füllstoff und führt wie vorgeschrieben durch intensives Rühren dieser Mischung so viel Energie zu, daß aufgrund der dadurch eintretenden stetigen Temperaturerhöhung die Hydrophobierungsreaktion abläuft, erhält man nur ein klumpendes Produkt. Ein fließfähiges, feinteiliges wie das erfindungsgemäß hergestellte wäre aber erwünscht.

An den erfindungsgemäß hergestellten modifizierten Füllstoffen wurden Methoxygruppen-Bestimmungen (F. Vieböck und A. Schwabach, Chem. Ber. 63, (1930) 2818) durchgeführt.

Nach der Totalhydrophobierung von gefällter Kieselsäure des Typs ULTRASIL (R) VN 2 (125 $m^2/g$) bzw. ULTRASIL (R) VN 3 (175 $m^2/g$) mit $1{,}75 \cdot 10^{-6}$ Mol Si 167/$m^2$, bezogen auf die Kieselsäure, ergeben sich folgende Werte für die Anzahl an freien, noch vorhandenen Methoxygruppen (von sechs ursprünglich pro Molekül vorhandenen):

| | erfindungsgemäßes Verfahren |
|---|---|
| VN 2/Si 167 | 1,7 |
| VN 3/Si 167 | 2,5 |

Die erfindungsgemäß hergestellten lagerstabilen modifizierten Füllstoffe führen in den vulkanisierten Kautschukmischungen zu einer deutlichen Verbesserung der gummitechnischen Eigenschaften im Vergleich zu Mischungen ohne modifizierte Füllstoffe.

Als Nachweis für die Lagerstabilität dient die Bestimmung des Polysulfidgehaltes über einen Lagerzeitraum von 12 Monaten bei 50 °C (Tab. 5), die lediglich innerhalb der Meßgenauigkeit geringfügig schwankt.

Die parallel hierzu durchgeführte Umsetzung von Mercaptosilan und silikatischem Füllstoff, entsprechend US-PS 4,141,751 führt dagegen zu Produkten mit starken Schwankungen im Gesamtschwefelgehalt (Tab. 4), was auf eine unzureichende Lagerstabilität hinweist.

Das erfindungsgemäße Verfahren kann sowohl diskontinuierlich als auch kontinuierlich durchgeführt werden. Die jeweils erhaltenen Produkte weisen gleiche Eigenschaften auf.

Die folgenden Beispiele erläutern das Herstellungsverfahren und geben einen Einblick in die vorteilhaften Eigenschaften der unter Verwendung der erfindungsgemäß hergestellten modifizierten Füllstoffe erhaltenen Vulkanisate.

Bei der verwendeten polysulfidischen Organosiliciumverbindung und den übrigen Verbindungen handelt es sich um folgende Produkte:

Polysulfidische Organosiliciumverbindungen:

Si 167 = Bis(3-trimethoxysilylpropyl)-tetrasulfan (Degussa)

| | |
|---|---|
| Perbunan(R) NS 3307 | Nitrilbutadienkautschuck (NBR) |
| Buna(R) Hüls | Styrol-Butadien Kautschuk (SBR) |
| SMR 5 | Standard Malaysian Rubber (Naturkautschuk) |
| CORAX(R) N 220 | Ruß, Oberfläche (BET) 120 $m^2/g$ (Degussa) |
| Ultrasil(R) VN 3 | gefällte Kieselsäure mit einer Oberfläche von 175 $m^2/g$ (Degussa) |
| Naftolen(R) ZD: | Weichmacher aus Kohlenwasserstoffen |
| Vulkanox(R) 4010 NA: | N-Isopropyl-N'-phenyl-p-phenylendiamin |
| Vulkanox(R) HS: | Poly-2,2,4-trimethyl-1,2-dihydrochinolin |
| Protektor(R) G35: | Ozonschutzwachs |
| Vulkacit(R) MOZ: | N-Morpholin-2-benzthiazolsulphenamid |
| Vulkacit(R) Mercapto: | 2-Mercaptobenzthiazol |
| Vulkacit(R) Thiuran: | Tetramethyl-thiurammonosulfid |
| Vulkacit(R) CZ: | N-Cyclohexyl-2-benzothiazolsulphenamid |
| PEG 4000: | Polyethylenglykol |
| MBTS: | 2,2'-Dibenzothiazyldisulfid |
| TMTD: | Tetramethylthiuramdisulfid |
| KP 140: | aliphatische Weichmacher |

Prüfungsnormen:

Die physikalischen Prüfungen wurden bei Raumtemperatur nach folgenden Normvorschriften ausgeführt:

| | | gemessen in |
|---|---|---|
| Zugfestigkeit, Bruchdehnung und Spannungswert | DIN 53 504 | MPa. |
| Weiterreißwiderstand | DIN 53 507 | N/mm |
| Shore-A-Härte | DIN 53 505 | - |
| Mooney-Prüfung, ML 4 | DIN 53 524 | - |
| Goodrich Flexometer (Bestimmung der Wärmebildung = Heat build-up. Δ T) | ASTM D 623-62 | °C |
| Firestone-Ball Rebound | AD 20245 | |
| DIN-Abrieb | DIN 53 516 | ($mm^3$) |
| Compression Set B | ASTM D 395 | |

Das Herstellverfahren:

Beispiel 1

In ein mit einem doppelstückigen Variant-Mischwerkzeug mit Horn, einem im Deckel montierten Leitblech mit Temperaturmesser, einer Entlüftung und einem Hohlmantel zwecks Temperierung durch Dampf oder Wasser ausgerüsteten Henschel F.M. 40 Liter-Mischaggregat, werden 4 kg ULTRASIL (R) VN 3 (175 $m^2$/g Oberfläche eingefüllt.

1. Stufe: Nach dem Verschließen des Deckels wird die Drehzahl des Mischwerkzeugs auf 2.600 UPM gebracht. Bei Raumtemperatur (~20-25 °C) werden 506 g Si 167 auf den Füllstoff gesprüht, das Gemisch homogenisiert und anschließend aus dem Mischer entfernt. Die Silanmenge entspricht $3{,}2 \cdot 10^{-6}$ Mol Trialkoxysilylgruppen/$m^2$ Oberfläche.

2. Stufe: Nach dem Aufwärmen des Mischers auf 120 °C wird das Mischgut aus Stufe 1 wiederum in den Mischer gefüllt und dessen Drehzahl auf 2.600 UPM gebracht. Nach Erreichen einer Temperatur von 140 °C wird das Mischaggregat abgeschaltet und nach einer Gesamtverweilzeit von 10 min entleert.

Die folgenden Tabellen enthalten die Meßwerte, wie sie unter Verwendung der erfindungsgemäß hergestellten Füllstoffe in verschiedenen Vulkanisaten gefunden werden (Konzentrationsangaben erfolgen in Gew.-Teilen).

Beispiel 2

1. Stufe: Über eine Differential-Dosierwaage wird ULTRASIL VN 2 (125 $m^2$/g, gefällte Kieselsäure) mit einer Leistung von 25 kg/h in einen kontinuierlichen Mischer dosiert. Gleichzeitig wird aus einer Vorlage das Silan Si 167 über eine Kolbenmembranpumpe und eine Zerstäuberdüse mit einer Leistung von 2,25 kg/h bei Raumtemperatur auf die im Mischer befindliche Kieselsäure aufgesprüht. Nach intensiver Durchmischung wird das befeuchtete Material über eine Schnecke unter Aufrechterhaltung eines konstanten Niveaus im Mischer ausgetragen.

2. Stufe: Die aus dem Mischer ausgetragene Kieselsäure/Organosilan-Mischung wird mit einer Membranpumpe in einen beheizten Reaktor gefördert. Die Temperatur im Reaktor liegt bei 140 °C, die Verweilzeit im Reaktor beträgt 2 Stunden, wobei die ca. 10 - 20 min überschreitende Zeit im allgemeinen dazu dient, den bei der Reaktion abgespalteten Alkohol zu entfernen. Das sich im Reaktor befindliche Produkt wird anschließend über eine Zellradschleuse unter Aufrechterhaltung eines konstanten Niveaus im Reaktor ausgetrage.

Man erhält ein lagerstabiles mit Bis-(3-trimethoxysilylpropyl)-tetrasulfan (Si 167) modifiziertes Ultrasil VN2, das mit einer Membranpumpe in ein Produktsilo gefördert wird, aus dem man es anschließend in Papiersäcke füllen kann.

TABELLE 1:

Modifizierte gefällte Kieselsäure in Naturkautschuk

| | | | |
|---|---|---|---|
| SMR 5 ML(1+4)=70-80 | | 100 | 100 |
| Ultrasil VN3 | | 40 | - |
| Si 167 modifiz. Ultrasil VN 3 (entspricht 5,08 GT Si 167 auf 100 GT VN 3) | | - | 45,08 |
| Si 167 | | 5,08 | - |
| Zinkoxid RS | | 4 | 4 |
| Stearinsäure | | 2 | 2 |
| Naftolen ZD | | 2 | 2 |
| Protektor G35 | | 1,5 | 1,5 |
| Vulkanox HS | | 1,5 | 1,5 |
| Vulkanox 4010 NA | | 1,0 | 1,0 |
| Vulkacit MOZ | | 2,82 | 2,82 |
| Schwefel | | 2,86 | 2,86 |
| ML(1+4) bei 100°C | | 83 | 84 |
| Vulkanisationstemperatur: 145°C/$t_{95}$ | | | |
| Zerreißfestigkeit | (MPa) | 18,4 | 21,3 |
| Spannungswert) 300 % | (MPa) | 13,2 | 13,8 |
| Bruchdehnung | ( % ) | 380 | 410 |
| Weiterreißwiderstand | (N/mm) | 13 | 15 |
| Ball-Rebound | ( % ) | 63,5 | 67,5 |
| Shore-A-Härte | | 65 | 65 |
| DIN-Abrieb | ($mm^3$) | 146 | 119 |
| Flexometer (0,175"/108N/30"/RT) | | | |
| ΔT Center | ( °C) | 44 | 41 |
| Statische Compression | ( % ) | 7,7 | 6,3 |
| Dynamische Compression | ( % ) | 7,3 | 5,6 |

TABELLE 2:

Modifizierte gefällte Kieselsäure in SBR 1500

| | | | |
|---|---|---|---|
| Buna Hüls 1500 | | 100 | 100 |
| Ultrasil VN 2 | | 50 | - |
| Si 167 modifiz. Ultrasil VN 2 (entspricht 3 GT Si 167 auf 100 GT VN 2) | | - | 51,5 |
| Zinkoxid RS | | 4 | 4 |
| Stearinsäure | | 2 | 2 |
| Vulkacit CZ | | 2 | 2 |
| Schwefel | | 2 | 2 |
| ML(1+4) bei 100 °C | | 84 | 86 |
| Vulkanisationstemperatur 150°C/$t_{95}$ | | | |
| Zerreißfestigkeit | (MPa) | 12,8 | 16,5 |
| Spannungswert 300 % | (MPa) | 2,6 | 5,1 |
| Bruchdehnung | ( % ) | 680 | 590 |
| Weiterreißwiderstand | (N/mm) | 13 | 13 |
| Ball-Rebound | ( % ) | 34 | 37 |
| Shore-A-Härte | | 60 | 64 |
| DIN-Abrieb | ($mm^3$) | 192 | 147 |
| Compression Set (22h/70°C) | | 20,2 | 14,7 |
| Goodrich-Flexometer (0,175"/108N) | | n.meßbar | |
| $\Delta$T Center | ( °C) | " | 137 |
| Dynamische Compression | ( % ) | " | 10 |

TABELLE 3:

Modifizierte gefällte Kieselsäure in NBR

| | | | |
|---|---|---|---|
| Perbunan NS 3307 | | 100 | 100 |
| Ultrasil VN 3 | | 50 | - |
| Si 167 modifiz. Ultrasil VN 3 (entspricht 12,8 GT Si 167 auf 100 GT VN 3) | | - | 56,4 |
| Zinkoxid RS | | 5 | 5 |
| Stearinsäure | | 2 | 2 |
| Dioctylphtalat | | 10 | 10 |
| KP 140 | | 10 | 10 |
| PEG 4000 | | 2,5 | 2,5 |
| MBTS | | 1,2 | 1,2 |
| TMTD | | 0,6 | 0,6 |
| Schwefel | | 1,5 | 1,5 |
| ML(1+4) bei 100°C | | 78 | 52 |
| Vulkanisationstemperatur: 160°C/$t_{95}$ | | | |
| Zerreißfestigkeit | (MPa) | 15,1 | 13,7 |
| Spannungswert 200 % | (MPa) | 2,7 | 9,2 |
| Bruchdehnung | ( % ) | 630 | 270 |
| Weiterreißwiderstand | (N/mm) | 12 | 6 |
| Firestone Ball-Rebound | ( % ) | 32,8 | 31,8 |
| Shore-A-Härte | | 66 | 74 |
| DIN-Abrieb | ($mm^3$) | 139 | 65 |
| Compression Set B | | | |
| 22 h/ 70 °C | ( % ) | 20,5 | 10,9 |
| 70 h/100 °C | ( % ) | 51,7 | 32,7 |

Lagerstabilität:

Zur Beurteilung der Lagerstabilität der mit polysulfidischen Organosiliciumverbindung(en) modifizierten Füllstoffe werden folgende Werte ermittelt:

Polysulfidschwefelgehalt von mit polysulfidischen Organosilicumverbindung(en) modifizierten Füllstoffen bei offener Lagerung bei 50 °C über eine Dauer von 12 Monaten.

Sie zeigen einen konstanten Gehalt an Polysulfidschwefel über den gesamten Zeitraum (Tabelle 5).

Im Vergleich dazu ergibt sich bei gleichartigen Messungen an modifizierten Kieselsäuren, die man nach dem aus der US-PS 4,141,751 bekannten Verfahren unter Verwendung von 3-Mercaptopropyltrimethoxysilan (A 189) erhält, ein starkes Schwanken der gefundenen Schwefelwerte. Dies deutet auf eine unzureichende Lagerstabilität des erhaltenen Produkts hin. (Tabelle 4)

Es gilt:

1 GT Si $167/_{100\ GT\ VN3}$ ≙ 1,256 $10^{-7}$ Mol Si $167/_{m^2}$

1 GT Si $189/_{100\ GT\ VN3}$ ≙ 2,909 $10^{-7}$ Mol A $189/_{m^2}$

| CHEMISCHE ANALYSE- A189 MODIFIZIERTES ULTRASIL VN3 OFFENE LAGERUNG BEI 50°C | | | | |
|---|---|---|---|---|
| | GESAMTSCHWEFEL | | | |
| GT A189 / 100 GT VN3 | THEORETISCH ERRECHNET % | AUSGANGS-MATERIAL % | 6. MONATE % | 12. MONATE % |
| 1.1 | 0.151 | 0.165 | 0.180 | 0.213 |
| 2.2 | 0.323 | 0.336 | 0.521 | 0.530 |
| 3.3 | 0.493 | 0.550 | 0.731 | 0.664 |
| 3.8 | 0.576 | 0.639 | 0.739 | 0.742 |
| 4.4 | 0.659 | 0.747 | 1.234 | 1.205 |
| 5.5 | 0.822 | 0.918 | 1.393 | 1.102 |
| 8.2 | 1.219 | 1.373 | 1.858 | 1.783 |
| 10.9 | 1.599 | 1.864 | 2.419 | 2.051 |
| P6659 | | | | |

Tabelle 4

| CHEMISCHE ANALYSE-Si167 MODIFIZIERTES ULTRASIL VN3 OFFENE LAGERUNG BEI 50°C | | | | |
|---|---|---|---|---|
| | POLYSULFIDSCHWEFEL | | | |
| GT Si167 / 100 GT VN3 | THEORETISCH ERRECHNET % | AUSGANGS-MATERIAL % | 6. MONATE % | 12. MONATE % |
| 2.5 GT Si167 | 0.324 | 0.339 | 0.322 | 0.300 |
| 5.4 GT Si167 | 0.635 | 0.684 | 0.653 | 0.620 |
| 7.6 GT Si167 | 0.934 | 0.964 | 0.921 | 0.950 |
| 8.9 GT Si167 | 1.079 | 1.135 | 1.042 | 1.004 |
| 10.1 GT Si167 | 1.221 | 1.237 | 1.219 | 1.202 |
| 12.7 GT Si167 | 1.497 | 1.587 | 1.473 | 1.402 |

Tabelle 5

Beispiel 3

Gemäß den Herstellbeispielen 1 und 2 werden mit 3-Thiocyanatopropyltriethoxysilan (Si 264) modifizierte Kieselsäuren hergestellt.
Es ergeben sich folgende Werte für die noch freien Ethoxygruppen auf der Oberfläche (pro Silanmolekül)

Tabelle 6

| GT Si 264/100 GT VN3 | Mol Si264/$m^2$ | Ethoxygruppen |
|---|---|---|
| 1,34 | $3 \cdot 10^{-7}$ | 0,65 |
| 2,65 | $7 \cdot 10^{-7}$ | 0,45 |
| 4,02 | $1 \cdot 10^{-6}$ | 0,29 |
| 5,4 | $1,4 \cdot 10^{-6}$ | 0,23 |
| 6,7 | $1,8 \cdot 10^{-6}$ | 0,24 |

Tabelle 7

| GT Si $264/_{100\ GT\ VN2}$ | Mol $Si264/_{m^2}$ | Ethoxygruppen |
|---|---|---|
| 1,34 | $5 \cdot 10^{-7}$ | 0,49 |
| 2,65 | $1 \cdot 10^{-6}$ | 0,29 |
| 4,02 | $1,5 \cdot 10^{-6}$ | 0,24 |
| 5,4 | $2,0 \cdot 10^{-6}$ | 0,26 |
| 6,7 | $2,5 \cdot 10^{-6}$ | 0,30 |

Tabelle 8

Mit Si264 modifizierte gefällte Kieselsäure in SBR 1500

| | | | |
|---|---|---|---|
| Buna Hüls 1500 | 100 | 100 | 100 |
| ZnO RS | 3 | 3 | 3 |
| Stearinsäure | 2 | 2 | 2 |
| ULTRASIL VN 2 | 50 | - | - |
| Si264 mod. VN2 (4,02 GT Si264 auf 100 GT VN2) | - | 50 | - |
| Si264 mod. VN2 (6,7 GT Si264 auf 100 GT VN2) | - | - | 50 |
| Vulkacit CZ | 2 | 2 | 2 |
| Schwefel | 2 | 2 | 2 |
| Rheometer 150 °C | | | |
| $D_{max} - D_{min}$ (Nm) | 9,79 | 11,91 | 12,30 |
| $t_{10\ \%}$ (min) | 19,1 | 16,3 | 14,0 |
| $t_{90\ \%}$ (min) | 40,3 | 45,9 | 36,4 |
| $t_{90\ \%}-t_{10\ \%}$ (min) | 24,3 | 29,6 | 22,4 |
| Vulkanisationstemperatur: 150 °C/$t_{95\ \%}$ | | | |
| Zerreißfestigkeit (MPa) | 14,3 | 26,0 | 25,7 |
| Modul 300 (MPa) | 3,8 | 7,3 | 8,5 |
| Bruchdehnung (%) | 650 | 600 | 560 |
| Shore Härte | 66 | 76 | 76 |

## Patentansprüche

1. Verfahren zur Oberflächenmodifizierung von natürlichen oder synthetischen oxidischen oder silikatischen Füllstoffen unter Einsatz einer oder mehrerer Organosiliciumverbindungen der Formel (I)

$$\left[R^1_n (RO)_{3-n} Si—(Alk)_m—(Ar)_p\right]_q \left[B\right] \quad (I)$$

in der bedeuten:
B: -SCN (wenn q = 1) oder $-S_x-$ (wenn q = 2),
R und $R^1$ eine Alkylgruppe mit 1 bis 4 Kohlenstoffatomen, den Phenylrest, wobei alle Reste R und $R^1$ jeweils die gleiche oder eine verschiedene Bedeutung haben können, R eine $C_1$- $C_4$-Alkyl-$C_1$-$C_4$-Alkoxygruppe,

n: 0;1 oder 2
Alk: einen zweiwertigen, geraden oder verzweigten Kohlenwasserstoffrest mit 1 bis 6 Kohlenstoffatomen,
m: 0 oder 1
Ar: einen Arylenrest mit 6 bis 12 C-Atomen
p: 0 oder 1 mit der Maßgabe, daß p und m nicht gleichzeitig 0 bedeuten und
x: eine Zahl von 2 bis 8,

dadurch gekennzeichnet, daß man

a) mindestens eine Organosiliciumverbindung gemäß Formel I, bei Temperaturen kleiner 60 °C in einer Konzentration von $1.10^{-7}$ bis zu $3{,}5 \cdot 10^{-6}$ Mol Trialkoxysilylgruppen auf einen Quadratmeter Füllstoffoberfläche, mit dem Füllstoff intensiv vermischt und
b) anschließend die homogenisierte Mischung in einem vorgeheizten Mischer, im Temperierbett oder einem anderen geeigneten heizbaren Reaktionsgefäß bei einer Temperatur von 60° bis 160°C der Hydrophobierungsreaktion unterwirft.

## Claims

1. A process for the surface modification of natural or synthetic oxidic or silicate fillers using one or more organosilicon compounds corresponding to formula (I)

$$\left[R^1_n(RO)_{3-n}Si \quad -(Alk)_m \quad -(Ar)_p\right]_q \left[B\right] \quad (I)$$

in which
B represents -SCN (where q = 1) or $-S_x-$ (where q = 2),
R and $R^1$ may be the same or different and represent a $C_{1-4}$ alkyl group or the phenyl radical, in addition to which R may be a $C_{1-4}$-alkyl-$C_{1-4}$-alkoxy group,
n is 0, 1 or 2,

Alk is a difunctional, linear or branched hydrocarbon radical containing 1 to 6 carbon atoms,
m is 0 or 1,
Ar is a $C_{6-12}$ arylene radical,
p is 0 or 1, with the proviso that p and m cannot both be 0 and
x is a number of 2 to 8,

characterized in that

a) at least one organosilicon compound corresponding to formula I is intensively mixed with the filler at temperatures below 60°C in a concentration of $1.10^{-7}$ to $3.5 \cdot 10^{-6}$ mol trialkoxysilyl groups per square meter filler surface and
b) the homogenized mixture is then subjected to the hydrophobicizing reaction in a preheated mixer, in a constant-temperature bed or in any other suitable heatable reaction vessel at a temperature of 60 to 160°C.

## Revendications

1. Procédé de modification des surfaces de substances de charge renfermant des oxydes ou des silicates, naturelles ou synthétiques, par utilisation d'un ou plusieurs composés organosiliciques de formule (I)

$$\left[R^1_n(RO)_{3-n}Si - (Alk)_m - (Ar)_p\right]_q \quad [B] \qquad (I)$$

dans laquelle,
B signifie -SCN (quand q = 1) ou $-S_x-$ (quand q = 2).
R et $R^1$ signifient un radical alcoyle ayant de 1 à 4 atomes de carbone, le reste phényle, tous les restes R et $R^1$ respectivement peuvent avoir la même signification ou une signification différente R est un groupe (alcoyle en $C_1$ - $C_4$) (alcoxy en $C_1$ - $C_4$).
n : 0 ; 1 ou 2
Alk : signifie un radical hydrocarboné linéaire ou ramifié, divalent, ayant de 1 à 6 atomes de carbone.
m : 0 ou 1
Ar : est un radical arylène ayant de 6 à 12 atomes de carbone.
p : 0 ou 1 avec la restriction que p et m ne signifient pas en même temps 0 et
x : est un nombre allant de 2 à 8,
caractérisé en ce que

a) l'on mélange au moins un composé organosilicique selon la formule I, à des températures plus basses que 60°C, à une concentration allant de 1 . $10^{-7}$ à 3,5 .$10^{-6}$ mol de groupes trialcoxysilyle sur un mètre carré de surface de substance de charge de manière intensive avec la substance de charge, et
b) ensuite on soumet le mélange homogénéisé dans un mélangeur préchauffé en un lit de traitement à température constante ou dans un autre récipient de réaction approprié chauffable, approprié à une réaction d'hydrophobisation à une température allant de 60°C à 160°C.